# FASCICULE DE BREVET EUROPEEN

(11) **EP 3 114 012 B1**
(45) Date de publication et mention de la délivrance du brevet: **04.04.2018**
(21) Numéro de dépôt: 15709237.0
(22) Date de dépôt: 10.02.2015
(51) Int. Cl.: B62D 25/14

(54) **ASSEMBLAGE D'UN COCKPIT ET D'UNE STRUCTURE DE VEHICULE AUTOMOBILE ET PROCEDE DE MONTAGE CORRESPONDANT**
ANORDNUNG EINES COCKPITS UND EINER KRAFTFAHRZEUGSTRUKTUR SOWIE ENTSPRECHENDES MONTAGEVERFAHREN
ASSEMBLY OF A COCKPIT AND OF A MOTOR VEHICLE STRUCTURE, AND CORRESPONDING ASSEMBLY METHOD

(30) Priorité: 04.03.2014 FR 1451732
(43) Date de publication de la demande: 11.01.2017
(73) Titulaire: Renault S.A.S., 92100 Boulogne-Billancourt (FR)
(72) Inventeur: STANCA, Stefan, Pitesti (RO); BURICEL, Catalin, Bucuresti (RO)
(86) Numéro de dépôt international: PCT/FR2015/050326
(87) Numéro de publication internationale: WO 2015/132496

(56) Documents cités:
- DE-A1-102009 049 357
- FR-A1- 2 890 370
- US-A1- 2007 290 524

## Description

L'invention concerne un assemblage d'un cockpit et d'une structure de véhicule automobile et un procédé de montage de cet assemblage.

La partie avant d'un habitacle de véhicule automobile est délimitée par une planche de bord supportée par une traverse, au moins en partie métallique et formant un élément de structure du véhicule. L'ensemble constitué par la traverse et la planche de bord, appelé « cockpit », a une fonction mécanique structurelle et sert de support à de nombreux éléments dont des éléments aérauliques, tels que des conduits d'air ou un système de ventilation et/ou de conditionnement d'air. De tels éléments aérauliques peuvent également faire partie du cockpit.

Afin d'assurer la stabilité de la traverse de planche de bord, et donc du cockpit, après son montage, cette traverse doit être positionnée précisément par rapport à la structure du véhicule. Il est usuel de centrer une planche de bord par rapport à une traverse, tel que décrit dans le document FR 2 890 370 A1. Mais le centrage du cockpit, notamment le centrage de la traverse de planche de bord par rapport à la structure du véhicule est en général effectué par un outil d'assistance qui porte le cockpit ou la traverse et la positionne par rapport à la structure du véhicule en utilisant comme référentiel les extrémités latérales de la structure du véhicule. Une fois correctement positionnée, la traverse de planche de bord est fixée par ses extrémités à la structure du véhicule. Un tel procédé est relativement complexe et peut engendrer des dispersions de montage, avec un risque élevé de déréglage de l'outil d'assistance, résultant en un positionnement non conforme de la traverse. En outre, il nécessite des opérations de maintenance et de calibrage régulières de l'outil d'assistance, ce qui augmente les coûts de montage.

Il existe donc un besoin pour un assemblage d'un cockpit à une structure de véhicule avec un positionnement précis du cockpit par rapport à une structure de véhicule, ce positionnement étant obtenu de manière simple, sûre et peu coûteuse.

L'invention vise à pallier ces inconvénients en proposant un assemblage d'un cockpit et d'une structure de véhicule automobile, ledit cockpit comprenant au moins une traverse, une planche de bord et un élément aéraulique, caractérisé en ce qu'il comporte un système de centrage principal comprenant :
- au moins un premier élément de centrage principal, solidaire d'un élément de structure transversal du véhicule,
- au moins un deuxième élément de centrage principal, solidaire d'un élément de cockpit, ce deuxième élément de centrage coopérant avec ledit premier élément de centrage.

Le système de centrage principal permet ainsi de positionner, notamment d'indexer, le cockpit directement par rapport à la structure du véhicule. Un tel agencement permet de réduire les dispersions de montage et de s'affranchir de la nécessité d'utiliser un outil d'assistance complexe pour réaliser le positionnement du cockpit par rapport au véhicule. Ceci permet ainsi de réduire les coûts de montage, de fabrication et de maintenance d'un outil d'assistance, ce dernier n'étant nécessaire que pour supporter le cockpit ou la traverse du cockpit.

Avantageusement et de manière non limitative, l'élément de structure transversal du véhicule peut être une cloison transversale de la structure de véhicule, par exemple une cloison de boite à eau ou une cloison de chauffage.

Une telle cloison peut notamment être au moins en partie métallique ou en matériau polymère. Un matériau polymère peut faciliter la réalisation du système de centrage.

Usuellement, une boite à eau est une sorte de goulotte s'étendant suivant la direction transversale du véhicule à la base du pare-brise. Elle est destinée à séparer l'air de l'eau qui s'écoule le long du pare-brise et du capot. L'eau s'écoule en un ou plusieurs points d'évacuation prévus au fond de la boite à eau. L'air est acheminé vers l'élément aéraulique du cockpit tel qu'un système de ventilation et/ou de conditionnement ou des conduits de ventilation de l'habitacle.

Une cloison de chauffage correspond habituellement à une partie supérieure du tablier, cloison qui sépare l'habitacle du compartiment avant d'un véhicule.

Afin de faciliter la réalisation du deuxième élément de centrage principal, ce dernier peut être en matériau polymère. L'élément de cockpit auquel est solidarisé cet élément de centrage peut ainsi être entièrement en matériau polymère ou seule sa partie comportant le deuxième élément de centrage principal peut être en matériau polymère. Le deuxième élément de centrage principal peut alors être réalisé d'une pièce avec l'élément de cockpit ou une partie de l'élément de cockpit.

Avantageusement et de manière non limitative, l'élément de cockpit auquel est solidarisé le deuxième élément de centrage principal peut être la traverse ou un élément aéraulique du cockpit. La solidarisation du deuxième élément de centrage principal à un élément aéraulique, notamment un élément aéraulique présentant une structure en matériau polymère, peut faciliter la réalisation du deuxième élément de centrage, lequel peut être réalisé d'une pièce avec la structure de l'élément aéraulique, par exemple par moulage ou autre. Tel que déjà mentionné, cet élément aéraulique peut être un conduit d'air ou un système de ventilation et/ou de conditionnement d'air.

Avantageusement et de manière non limitative, le premier élément de centrage principal et le deuxième élément de centrage principal peuvent être choisis parmi un orifice ou un logement de dimension et de forme prédéterminées et un pion de centrage de forme au moins en partie complémentaire dudit orifice et/ou logement. Les éléments de centrage principal peuvent ainsi présenter des formes simples, faciles et peu coûteuses à fabriquer. Notamment, le pion de centrage peut être de forme complémentaire d'un logement ou d'un orifice, ou être au moins en partie complémentaire, une partie de sa surface étant par exemple en contact avec les parois délimitant le logement ou l'orifice. Un premier élément de centrage principal en forme d'orifice et/ou logement peut être plus facile à réaliser au niveau de l'élément de structure transversal du véhicule.

Avantageusement, l'un des éléments de centrage principal peut comprendre un orifice traversant pourvu d'une douille définissant un logement pour l'autre élément ce centrage. Une telle douille peut être une pièce rapportée fixée à l'élément de structure ou de cockpit, par exemple par emboîtement, encliquetage, vissage, rivetage, collage ou autre. Elle peut être réalisée de manière simple en matériau polymère.

Avantageusement, les premier et deuxième éléments de centrage principal peuvent être conformés pour permettre une indexation du cockpit par rapport à la structure du véhicule selon au moins une direction de la structure de véhicule, de préférence selon au moins deux directions de la structure de véhicule, notamment suivant des directions transversale et verticale.

Avantageusement et de manière non limitative, l'assemblage selon l'invention peut comprendre un système de centrage secondaire conformé pour positionner, notamment indexer, la planche de bord du cockpit par rapport à l'élément de cockpit auquel est solidarisé le deuxième élément de centrage du système de centrage principal. Un tel agencement permet de réduire les risques de dispersion de montage de la planche de bord par rapport à la structure de véhicule et à la traverse.

Le système de centrage secondaire peut présenter une ou plusieurs caractéristiques identiques ou similaires aux caractéristiques précédemment décrites relatives au système de centrage principal.

Les éléments de centrage secondaires peuvent être éloignés des éléments de centrage du système de centrage principal. Toutefois, avantageusement, le système de centrage secondaire peut comprendre :
- au moins un premier élément de centrage secondaire situé à proximité d'un deuxième élément de centrage principal, solidaire du même élément de cockpit,
- au moins un deuxième élément de centrage secondaire solidaire de la planche de bord et coopérant avec le premier élément de centrage secondaire.

La proximité entre le premier élément de centrage secondaire et le deuxième élément de centrage principal permet de réduire les risques de dispersions de fabrication. Le premier élément de centrage secondaire peut par exemple être décalé verticalement et longitudinalement, notamment vers l'arrière de la structure de véhicule, par rapport au deuxième élément de centrage principal, notamment être situé au-dessus de ce deuxième élément de centrage principal. Ceci permet à la fois un accès aisé au premier élément de centrage secondaire pour un encombrement réduit.

Avantageusement et de manière non limitative, le système de centrage principal peut être situé dans une partie médiane transversalement de la structure du véhicule. Ceci peut faciliter le positionnement relatif du cockpit et de la structure.

En particulier, le système de centrage principal peut être situé au centre de la structure de véhicule transversalement.

En variante ou en combinaison, le système de centrage secondaire peut également être situé dans une partie médiane transversalement de la structure du véhicule, notamment au centre transversalement de la structure de véhicule. Autrement dit, le système de centrage secondaire peut être situé dans une partie médiane transversalement du cockpit.

L'invention concerne également un véhicule équipé d'un assemblage selon l'invention.

L'invention concerne enfin un procédé de montage d'un assemblage selon l'invention comprenant :
- soutenir au moins la traverse du cockpit au moyen d'un outil d'assistance, cette traverse étant positionnée transversalement (sensiblement parallèlement à un axe transversal) par rapport à la structure de véhicule,
- approcher la traverse de ladite structure de véhicule, notamment sensiblement parallèlement à un axe longitudinal, la traverse étant maintenue transversalement par ledit outil d'assistance, jusqu'à coopération des premier et deuxième éléments de centrage du système de centrage principal,
- fixer le cockpit à la structure du véhicule, notamment par fixation des extrémités de la traverse à la structure du véhicule.

L'outil d'assistance ayant pour seule fonction le soutien du cockpit, il peut être simplifié et ses coûts de maintenance réduits.

Lorsque l'assemblage selon l'invention comporte un système de centrage secondaire, le procédé de montage peut comprendre en outre une étape de positionnement, au moyen dudit système de centrage secondaire, puis une étape de fixation de la planche de bord à la traverse. Ces étapes peuvent être réalisées avant ou après l'étape d'approche, voire avant l'étape de soutien par un outil. En variante, l'étape de centrage de la planche de bord peut être réalisée avant l'étape de soutien ou d'approche et l'étape de fixation de la planche de bord peut être réalisée après la fixation de la traverse à la structure du véhicule.

L'invention est maintenant décrite en référence aux dessins annexés, non limitatifs, dans lesquels :
- la figure 1 est une représentation en perspective partielle d'un assemblage selon un mode de réalisation de l'invention, le cockpit étant dans une position d'approche de la structure du véhicule, avant assemblage de la planche de bord ;
- la figure 2 est une représentation similaire à celle de la figure 1, le cockpit étant dans une position centrée par rapport à la structure du véhicule, la planche de bord étant dans une position d'approche de la traverse ;
- la figure 3 est une représentation similaire à celle de la figure 2, la planche de bord étant centrée par rapport à la traverse ;
- la figure 4 représente une vue de côté de la partie supérieure de l'assemblage représenté sur la figure 3 ;
- la figure 5 est une vue en coupe selon la ligne B-B de la figure 4.

Dans la présente description, les termes avant, arrière, supérieur, inférieur, font référence aux directions avant et arrière du véhicule, autrement dit de la structure de véhicule, lorsque le cockpit est assemblé à la structure de véhicule. Les axes X, Y, Z, correspondent respectivement à l'axe longitudinal (d'avant en arrière), transversal et vertical du véhicule et de la structure de véhicule.

Par sensiblement horizontal, longitudinal ou vertical, on entend une direction/un plan formant un angle d'au plus 20°, voire d'au plus 10° avec une direction/un plan horizontal, longitudinal ou vertical.

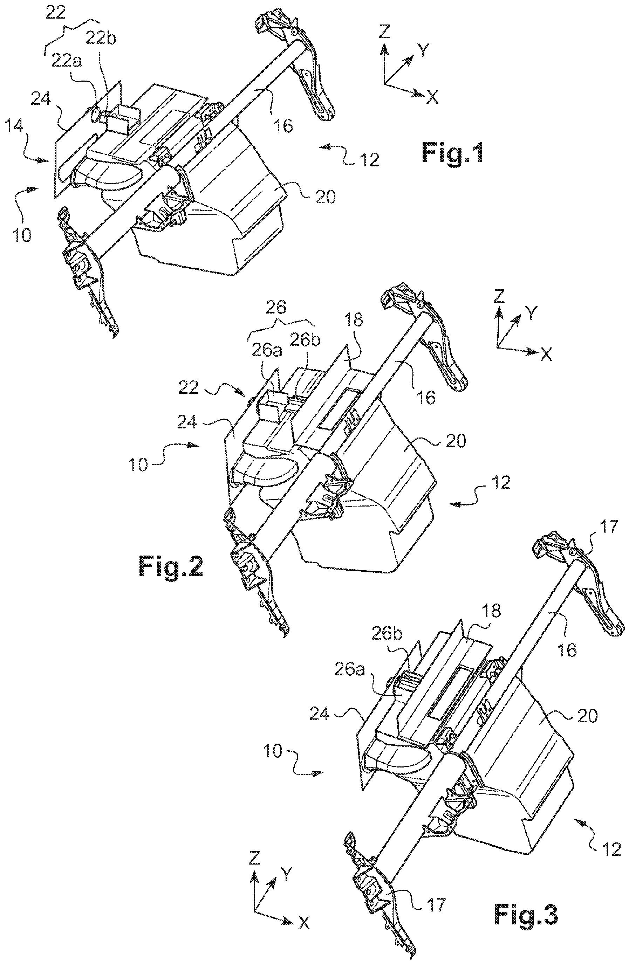

Les figures 1 à 3 représentent plusieurs étapes de montage d'un assemblage 10 d'un cockpit 12 et d'une structure 14 de véhicule automobile. Le cockpit 12 représenté comprend une traverse 16, une planche de bord 18 (non représentée figure 1, représentée partiellement sur les figures 2 à 5) et un élément aéraulique 20. Sur les figures, seule une partie d'un élément transversal 24 de la structure 14 de véhicule est représentée pour des raisons de simplification.

Dans l'exemple représenté, l'élément aéraulique 20 est un système de ventilation et d'air conditionné, parfois désigné par son acronyme anglo-saxon HVAC (Heat Ventilation and Air Conditioning).

Selon l'invention, cet assemblage 10 comporte un système de centrage principal 22 comprenant :
- un premier élément de centrage principal 22a solidaire d'un élément transversal 24 de la structure 14 du véhicule,
- un deuxième élément de centrage principal 22b solidaire d'un élément du cockpit 12, ce deuxième élément de centrage 22b coopérant avec le premier élément de centrage 22a.

Dans l'exemple représenté, l'élément du cockpit 12 comportant le deuxième élément de centrage principal 22b est l'élément aéraulique 20. L'élément de centrage 22b est ici solidarisé à une partie supérieure d'un boîtier de l'élément aéraulique 20, tel que visible sur les figures.

L'élément de structure transversal 24 du véhicule est ici une cloison de boîte à eau du véhicule qui s'étend sensiblement transversalement et sensiblement verticalement par rapport à la structure 14 du véhicule.

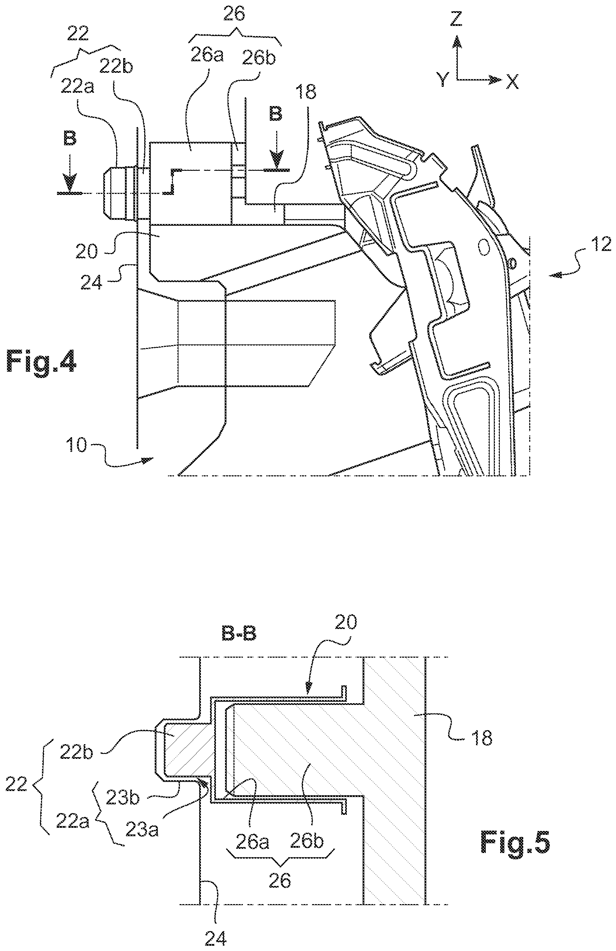

Les éléments de centrage principal 22a et 22b sont conformés pour permettre une indexation du cockpit 12 par rapport à la structure 14 du véhicule. Dans l'exemple représenté, ces éléments de centrage 22a et 22b sont de forme complémentaire et conformés pour permettre une indexation par rapport aux directions transversale Y et verticale Z du véhicule. Le premier élément de centrage principal 22a comprend ici un orifice traversant 23a recevant un pion formant le deuxième élément de centrage principal 22b. En particulier, dans cet exemple, l'orifice traversant 23a est pourvu d'une douille 23b de forme complémentaire du pion 22b (voir figures 4 et 5). Cette douille 23b peut notamment être en matériau polymère, fixée dans l'orifice 23a traversant la cloison 24. Ici, la douille 23b et le pion 22b sont de forme cylindrique. L'invention n'est toutefois pas limitée à cette forme particulière, la douille 23b et le pion 22b pouvant présenter une section polygonale, en forme de croix, etc...

Dans l'exemple décrit en référence aux figures, le système de centrage principal 22 est situé en partie médiane du cockpit 12, notamment au centre du véhicule (en Y0).

L'assemblage 10 représenté comprend également un système de centrage secondaire 26 conformé pour centrer la planche de bord 18 du cockpit 12 par rapport à l'élément de cockpit, ici l'élément aéraulique 20. Dans le présent exemple, le système de centrage secondaire 26 est situé également en partie médiane transversalement de l'assemblage 10, à proximité du premier système de centrage principal 22, notamment en Y0 comme ce dernier. Cette proximité permet de réduire les dispersions dues à la fabrication des pièces.

Ce système de centrage secondaire 26 comprend :
- un premier élément de centrage secondaire 26a situé à proximité d'un deuxième élément de centrage principal 22b du système de centrage principal 22, solidaire du même élément de cockpit 20,
- un deuxième élément de centrage secondaire 26b solidaire de la planche de bord 18 et coopérant avec le premier élément de centrage secondaire 26a.

Les éléments de centrage secondaires 26a et 26b sont conformés pour permettre une indexation de la planche de bord 18 par rapport à l'élément de cockpit, ici l'élément aéraulique 20. Dans l'exemple représenté, ces éléments de centrage secondaires 26a et 26b sont de formes au moins en partie complémentaires et conformés pour permettre une indexation par rapport aux directions transversale Y et verticale Z du véhicule. Le premier élément de centrage secondaire 26a se présente ainsi sous la forme d'un logement recevant un pion formant le deuxième élément de centrage 26b. En particulier, dans cet exemple, le pion 26b présente une section en forme de croix, les extrémités de la croix venant en appui contre les parois internes du logement 26a (représenté ouvert sur le dessus pour davantage de clarté). L'invention n'est toutefois pas limitée à ces formes particulières, les éléments de centrage secondaire pouvant présenter une forme similaire à celle des éléments de centrage principal et vice versa, ou toute autre forme déjà évoquée relativement aux éléments de centrage principal.

L'assemblage 10 décrit en référence aux figures peut être monté de la manière suivante. On utilise un outil d'assistance (non représenté) pour soutenir le cockpit 12 dans une position dans laquelle la traverse 16 s'étant transversalement par rapport à la structure 14 de véhicule, autrement dit parallèlement ou sensiblement parallèlement à l'axe transversal Y (fig. 1). On approche ensuite le cockpit 12 de la structure 14 de véhicule suivant la direction longitudinale X, la traverse 16 étant maintenue transversalement par l'outil d'assistance, jusqu'à coopération des premier et deuxième éléments de centrage principal 22a, 22b du système de centrage principal 22 (fig. 2). La planche de bord 18 maintenue dans une position transversale proche de sa position finale est ensuite approchée suivant l'axe longitudinal X de la traverse 16 (fig. 2) jusqu'à coopération des premier et deuxième éléments de centrage secondaire 26a, 26b du système de centrage secondaire 26 (fig. 3). On procède ensuite à la fixation du cockpit à la structure du véhicule, notamment par fixation des extrémités de la traverse 16 à la structure du véhicule, ces extrémités étant à cet effet pourvues de flasques 17.

Dans l'exemple représenté, les systèmes de centrage 22 et 26 comprennent chacun une seule paire d'éléments de centrage correspondants positionnée en partie médiane transversalement de l'assemblage, ici au milieu transversalement de la structure de véhicule. Notamment, les deux systèmes de centrage sont situés dans un même plan longitudinal vertical XZ de la structure du véhicule, le système de centrage secondaire 26 étant situé au-dessus verticalement du système de centrage principal 22.

L'invention n'est toutefois pas limitée à ce mode de réalisation particulier. On peut notamment prévoir deux ou plusieurs paires d'éléments de centrage pour l'un des deux systèmes de centrage ou pour les deux systèmes de centrage, par exemple éloignés l'un de l'autre transversalement. En variante ou en combinaison, on peut également envisager que le système de centrage secondaire soit distant du système de centrage principal.

## Revendications

1. Assemblage (10) d'un cockpit (12) et d'une structure (14) de véhicule automobile, ledit cockpit (12) comprenant au moins une traverse (16), une planche de bord (18) et un élément aéraulique (20), **caractérisé en ce qu'**il comporte un système de centrage principal (22) comprenant :
- au moins un premier élément de centrage principal (22a), solidaire d'un élément de structure transversal (24) du véhicule,
- au moins un deuxième élément de centrage principal (22b), solidaire d'un élément de cockpit (20), ce deuxième élément de centrage principal (22b) coopérant avec ledit premier élément de centrage principal (22a).

2. Assemblage (10) selon la revendication 1, **caractérisé en ce que** ledit élément de structure transversal (24) du véhicule est une cloison transversale de la structure (14) de véhicule, par exemple choisie parmi une cloison de boite à eau ou une cloison de chauffage, et/ou ledit élément de cockpit est ladite traverse ou un élément aéraulique.

3. Assemblage (10) selon l'une quelconque des revendications 1 ou 2, **caractérisé en ce que** le premier élément de centrage principal (22a) et le deuxième élément de centrage principal (22b) sont choisis parmi un orifice ou un logement de dimension et de forme prédéterminées et un pion de centrage de forme au moins en partie complémentaire dudit orifice et/ou logement.

4. Assemblage (10) selon la revendication 3, **caractérisé en ce que** l'un des éléments de centrage principal (22a) comprend un orifice traversant (23a) pourvu d'une douille (23b) définissant un logement pour l'autre élément de centrage principal (22b).

5. Assemblage (10) selon l'une quelconque des revendications 1 à 4, **caractérisé en ce qu'**il comprend un système de centrage secondaire (26) conformé pour positionner la planche de bord (18) du cockpit (12) par rapport à l'élément de cockpit (20) auquel est solidarisé le deuxième élément de centrage principal (22b).

6. Assemblage (10) selon la revendication 5, **caractérisé en ce que** le système de centrage secondaire (26) comprend :
- au moins un premier élément de centrage secondaire (26a) situé à proximité d'un deuxième élément de centrage principal (22b), solidaire du même élément de cockpit (20),
- au moins un deuxième élément de centrage secondaire (26b) solidaire de la planche de bord (18) et coopérant avec le premier élément de centrage secondaire (26a).

7. Assemblage (10) selon l'une quelconque des revendications 1 à 6, **caractérisé en ce que** le système de centrage principal (22) et/ou le système de centrage secondaire (26) sont situés dans une partie médiane transversalement de la structure (14) du véhicule.

8. Véhicule automobile comprenant un assemblage (10) selon l'une des revendications 1 à 7.

9. Procédé de montage d'un assemblage (10) selon l'une des revendications 1 à 7, comprenant :
- soutenir au moins la traverse (16) du cockpit (12) au moyen d'un outil d'assistance, ladite traverse (16) étant positionnée transversalement par rapport à la structure (14) de véhicule,
- approcher la traverse (16) de ladite structure (14) de véhicule, la traverse (16) étant maintenue transversalement par ledit outil d'assistance, jusqu'à coopération des premier et deuxième éléments de centrage principal (22a, 22b) du système de centrage principal (22),
- fixation du cockpit (12) à la structure (14) du véhicule, notamment par fixation des extrémités de la traverse (16) à la structure (14) du véhicule.

10. Procédé de montage selon la revendication 9, **caractérisé en ce qu'**il comprend en outre une étape de positionnement, au moyen d'un système de centrage secondaire (26) dudit assemblage (10), de la planche de bord (18) à la traverse (16) du cockpit (12) puis une étape de fixation de la planche de bord (18) à la traverse (16) du cockpit (12).

## Patentansprüche

1. Anordnung (10) eines Cockpits (12) und einer Kraftfahrzeugstruktur (14), wobei das Cockpit (12) wenigstens einen Querträger (16), ein Armaturenbrett (18) und ein lufttechnisches Element (20) umfasst, **dadurch gekennzeichnet, dass** sie ein Hauptzentriersystem (22) aufweist, welches umfasst:
- wenigstens ein erstes Hauptzentrierelement (22a), das mit einem Querstrukturelement (24) des Fahrzeugs fest verbunden ist,
- wenigstens ein zweites Hauptzentrierelement (22b), das mit einem Cockpitelement (20) fest verbunden ist, wobei dieses zweite Hauptzentrierelement (22b) mit dem ersten Hauptzentrierelement (22a) zusammenwirkt.

2. Anordnung (10) nach Anspruch 1, **dadurch gekennzeichnet, dass** das Querstrukturelement (24) des Fahrzeugs eine Quertrennwand der Fahrzeugstruktur (14) ist, die zum Beispiel aus einer Wasserkastentrennwand oder einer Heizungstrennwand ausgewählt ist, und/oder das Cockpitelement der Querträger oder ein lufttechnisches Element ist.

3. Anordnung (10) nach einem der Ansprüche 1 oder 2, **dadurch gekennzeichnet, dass** das erste Hauptzentrierelement (22a) und das zweite Hauptzentrierelement (22b) aus einer Öffnung oder einer Aufnahme mit vorbestimmter Abmessung und Form und einem Zentrierstift mit einer Form, die zu der Öffnung und/oder Aufnahme wenigstens teilweise komplementär ist, ausgewählt sind.

4. Anordnung (10) nach Anspruch 3, **dadurch gekennzeichnet, dass** eines der Hauptzentrierelemente (22a) eine Durchgangsöffnung (23a) umfasst, die mit einer Hülle (23b) versehen ist, welche eine Aufnahme für das andere Hauptzentrierelement (22b) definiert.

5. Anordnung (10) nach einem der Ansprüche 1 bis 4, **dadurch gekennzeichnet, dass** sie ein sekundäres Zentriersystem (26) umfasst, das dafür ausgebildet ist, das Armaturenbrett (18) des Cockpits (12) bezüglich des Cockpitelements (20) zu positionieren, mit welchem das zweite Hauptzentrierelement (22b) fest verbunden ist.

6. Anordnung (10) nach Anspruch 5, **dadurch gekennzeichnet, dass** das sekundäre Zentriersystem (26) umfasst:
- wenigstens ein erstes sekundäres Zentrierelement (26a), das sich in der Nähe eines zweiten Hauptzentrierelements (22b) befindet, das mit demselben Cockpitelement (20) fest verbunden ist,
- wenigstens ein zweites sekundäres Zentrierelement (26b), das mit dem Armaturenbrett (18) fest verbunden ist und mit dem ersten sekundären Zentrierelement (26a) zusammenwirkt.

7. Anordnung (10) nach einem der Ansprüche 1 bis 6, **dadurch gekennzeichnet, dass** das Hauptzentriersystem (22) und/oder das sekundäre Zentriersystem (26) sich in einem bezüglich der Querrichtung mittleren Teil der Struktur (14) des Fahrzeugs befinden.

8. Kraftfahrzeug, welches eine Anordnung (10) nach einem der Ansprüche 1 bis 7 umfasst.

9. Verfahren zur Montage einer Anordnung (10) nach einem der Ansprüche 1 bis 7, welches umfasst:
- Abstützen wenigstens des Querträgers (16) des Cockpits (12) mittels eines Hilfswerkzeugs, wobei der Querträger (16) quer bezüglich der Fahrzeugstruktur (14) positioniert wird,
- Annähern des Querträgers (16) an die Fahrzeugstruktur (14), wobei der Querträger (16) durch das Hilfswerkzeug quer gehalten wird, bis zum Zusammenwirken des ersten und des zweiten Hauptzentrierelements (22a, 22b) des Hauptzentriersystems (22),
- Befestigung des Cockpits (12) an der Struktur (14) des Fahrzeugs, insbesondere durch Befestigung der Enden des Querträgers (16) an der Struktur (14) des Fahrzeugs.

10. Verfahren zur Montage nach Anspruch 9, **dadurch gekennzeichnet, dass** es außerdem einen Schritt der Positionierung, mittels eines sekundären Zentriersystems (26) der Anordnung (10), des Armaturenbretts (18) am Querträger (16) des Cockpits (12) und danach einen Schritt der Befestigung des Armaturenbretts (18) am Querträger (16) des Cockpits (12) umfasst.

## Claims

1. Assembly (10) of a cockpit (12) and of a motor vehicle structure (14), said cockpit (12) comprising at least one crossmember (16), a dashboard (18) and an aeraulic element (20), **characterized in that** it comprises a main centring system (22) comprising:
- at least a first main centring element (22a), secured to a transverse structural element (24) of the vehicle,
- at least a second main centring element (22b), secured to a cockpit element (20), this second main centring element (22b) cooperating with said first main centring element (22a).

2. Assembly (10) according to Claim 1, **characterized in that** said transverse structural element (24) of the vehicle is a transverse partition of the vehicle structure (14), for example chosen from a scuttle partition or a heating partition, and/or said cockpit element is said crossmember or an aeraulic element.

3. Assembly (10) according to either one of Claims 1 and 2, **characterized in that** the first main centring element (22a) and the second main centring element (22b) are chosen from an orifice or a housing of predetermined dimension and shape and a centring pin with a shape at least partly complementary to said orifice and/or housing.

4. Assembly (10) according to Claim 3, **characterized in that** one of the main centring elements (22a) comprises a through-orifice (23a) provided with a sleeve (23b) defining a housing for the other main centring element (22b) .

5. Assembly (10) according to any one of Claims 1 to 4, **characterized in that** it comprises a secondary centring system (26) configured to position the dashboard (18) of the cockpit (12) with respect to the cockpit element (20) to which the second main centring element (22b) is secured.

6. Assembly (10) according to Claim 5, **characterized in that** the secondary centring system (26) comprises:
- at least a first secondary centring element (26a) situated in the vicinity of a second main centring element (22b) secured to the same cockpit element (20),
- at least a second secondary centring element (26b) secured to the dashboard (18) and cooperating with the first secondary centring element (26a).

7. Assembly (10) according to any one of Claims 1 to 6, **characterized in that** the main centring system (22) and/or the secondary centring system (26) are situated in a transversely median part of the structure (14) of the vehicle.

8. Motor vehicle comprising an assembly (10) according to one of Claims 1 to 7.

9. Method for mounting an assembly (10) according to one of Claims 1 to 7, comprising:
- supporting at least the crossmember (16) of the cockpit (12) by means of an assistance tool, said crossmember (16) being positioned transversely with respect to the vehicle structure (14),
- bringing the crossmember (16) near to said vehicle structure (14), the crossmember (16) being maintained transversely by said assistance tool until there is cooperation between the first and second main centring elements (22a, 22b) of the main centring system (22),
- fixing the cockpit (12) to the structure (14) of the vehicle, in particular by fixing the ends of the crossmember (16) to the structure (14) of the vehicle.

10. Mounting method according to Claim 9, **characterized in that** it additionally comprises a step of positioning the dashboard (18) at the crossmember (16) of the cockpit (12) by means of a secondary centring system (26) of said assembly (10) and then a step of fixing the dashboard (18) to the crossmember (16) of the cockpit (12).
